(19) Europäisches Patentamt
European Patent Office
Office européen des brevets

(11) **EP 3 399 356 A1**

(12) **EUROPEAN PATENT APPLICATION**
published in accordance with Art. 153(4) EPC

(43) Date of publication:
**07.11.2018 Bulletin 2018/45**

(51) Int Cl.:
*G02B 5/30* (2006.01)     *C08L 75/14* (2006.01)
*C08L 83/04* (2006.01)     *G02F 1/1335* (2006.01)

(21) Application number: **16881920.9**

(22) Date of filing: **04.08.2016**

(86) International application number:
**PCT/KR2016/008583**

(87) International publication number:
**WO 2017/115967 (06.07.2017 Gazette 2017/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.12.2015 KR 20150190479**

(71) Applicant: **Kolon Industries, Inc.
Gangseo-gu, Seoul 07793 (KR)**

(72) Inventors:
• **NAM, Si Wook
Yongin-si
Gyeonggi-do 16910 (KR)**
• **HWANG, Hong Gu
Yongin-si
Gyeonggi-do 16910 (KR)**
• **CHAE, Heon Seung
Yongin-si
Gyeonggi-do 16910 (KR)**
• **KIM, Si Min
Yongin-si
Gyeonggi-do 16910 (KR)**
• **KIM, Kyung Jong
Yongin-si
Gyeonggi-do 16910 (KR)**

(74) Representative: **Ter Meer Steinmeister & Partner
Patentanwälte mbB
Nymphenburger Straße 4
80335 München (DE)**

(54) **WIRE GRID POLARIZING PLATE AND OPTICAL COMPONENT INCLUDING SAME**

(57) The present invention relates to a wire grid polarizing plate, including a polarizing layer having an uneven pattern which is formed on at least one surface thereof and is configured such that a metal grid is formed on a plurality of grid-type protrusions, and an anti-reflective layer formed on at least one surface of the polarizing layer and configured such that a plurality of fine nano patterns is formed on a surface thereof, and to an optical component including the same.

FIG. 1

(a) (b) (c) (d) (e) (f) (g) (h) (i) (j)

Fine pattern of anti-reflective layer
Metal grid pattern
Substrate resin layer

## Description

## Technical Field

The present invention relates to a wire grid polarizing plate and an optical component including the same, and more particularly to a nano wire grid polarizing plate having superior transmittance and anti-reflective performance and an optical component including the same.

## Background Art

A polarizing plate functions to transmit or reflect light in a specific direction among electromagnetic waves, and, typically, a liquid crystal display (LCD) includes two polarizing plates so that liquid crystals in liquid crystal cells may cause optical interactions to thus realize an image.

A polarizing plate, currently mainly useful for a liquid crystal display (LCD), is a polarizing plate including an absorption-type polarizing film, in which the absorption-type polarizing film is mostly manufactured by adsorbing iodine or a dichroic dye to a polyvinyl alcohol (PVA) film and then stretching the film in a predetermined direction. In this case, however, the polarizing plate has poor mechanical strength in the direction of the transmission axis and shrinks when exposed to heat or moisture, thus remarkably deteriorating a polarization function, and also allows only light that vibrates in a specific direction to pass therethrough to thus form linearly polarized light. Hence, the efficiency of use of light thereof theoretically cannot exceed 50%.

Meanwhile, a wire grid polarizing plate (hereinafter referred to as a "WGP") refers to an array in which metal wires are arranged parallel to each other. A WGP is capable of reflecting a polarization component parallel to a metal grid and of transmitting a polarization component perpendicular thereto, and enables the reuse of reflected light, whereby an LCD having high luminance characteristics may be manufactured. In the WGP, when the pitch of the metal grid, that is, the wire interval, is close to or greater than the wavelength of the incident electromagnetic wave, light absorption occurs, but light loss due to light absorption may be minimized under the condition that the pitch of the metal grid is sufficiently small.

As for conventional techniques pertaining to a WGP, Korean Patent Application No. 2010-0102358 discloses a WGP comprising a first grid layer having at least one first grid pattern formed on a substrate, a second grid layer having at least one second grid pattern formed of a metal material on the first grid pattern, and a light absorption layer formed on the second grid layer to absorb external light, thereby realizing an improvement in luminance without a decrease in a contrast ratio (CR). In addition, Korean Patent No. 10-1336097 discloses a liquid crystal display device, comprising a wire grid polarizing plate having different patterns in different regions, in which at least one of the pitch (P), height (H), width (W) and duty cycle (DC) of the pattern is different in respective regions, thereby improving polarization performance and light efficiency.

Meanwhile, when unpolarized light is radiated onto the WGP, light that is transmitted while vibrating in a direction perpendicular to a metal grid is referred to as "P-polarized light", and light that is reflected while vibrating in a direction parallel to a metal grid is referred to as "S-polarized light". Theoretically, 100% of P-polarized light is transmitted and 100% of S-polarized light is absorbed or reflected, but this is not true in real-world applications. Therefore, polarization efficiency, which determines the contrast ratio (CR) of a display, becomes superior with a decrease in S-polarized light transmittance ($T_S$), and the luminance of a display, that is, brightness, may be improved with an increase in P-polarized light transmittance ($T_P$).

In order to increase P-polarized light transmittance ($T_P$), when the line width and height of the metal grid are decreased, S-polarized light transmittance ($T_S$) may also be increased, and thus polarization efficiency is somewhat decreased. In order to increase polarization efficiency, when the line width is increased, P-polarized light transmittance may decrease. In this way, the P-polarized light transmittance and polarization efficiency are in a trade-off relationship, and thus it is continuously necessary to develop techniques for improving both of them at the same time.

## Disclosure

## Technical Problem

Accordingly, the present invention is intended to provide a wire grid polarizing plate, which includes an anti-reflective layer to prevent the reflection of light and to increase transmittance, thereby increasing P-polarized light transmittance without a decrease in polarization efficiency.

**Technical Solution**

Therefore, a preferred first embodiment of the present invention provides a wire grid polarizing plate, comprising: a polarizing layer having an uneven pattern which is formed on at least one surface thereof and is configured such that a metal grid is formed on a plurality of grid-type protrusions; and an anti-reflective layer formed on at least one surface of the polarizing layer and configured such that a plurality of fine nano patterns is formed on a surface thereof.

In the first embodiment, the metal grid of the polarizing layer may have a height of 1 to 1000 nm, a line width of 1 to 140 nm, and a pitch, which is defined as the distance from a point where any grid line starts to a point where the adjacent grid line starts, of 50 to 200 nm.

In the first embodiment, the nano patterns of the anti-reflective layer may have a pitch of 10 to 500 nm and an aspect ratio of 1.0 to 5.0.

In the first embodiment, the anti-reflective layer may be formed from a curable resin composition comprising 100 parts by weight of urethane acrylate, having a weight average molecular weight of 100 to 30,000; and 75 to 250 parts by weight of a fluorine-containing siloxane-acrylate oligomer having a weight average molecular weight of 100 to 10,000, based on 100 parts by weight of the urethane acrylate.

As such, the curable resin composition may further comprise, based on 100 parts by weight of the urethane acrylate, 60 to 125 parts by weight of a diluent and 10 to 25 parts by weight of a polymerization initiator.

In the first embodiment, the wire grid polarizing plate may have a P-polarized light transmittance of 50% to 99%, an S-polarized light transmittance of less than 1%, and a polarization efficiency of 95% to 100%.

A second embodiment of the present invention provides an optical component including the wire grid polarizing plate, and the optical component according to the second embodiment may have a contrast ratio (CR) of 500 to 1,000,000.

**Advantageous Effects**

According to the present invention, a wire grid polarizing plate can exhibit high light transmittance, thus improving P-polarized light transmittance without a decrease in polarization efficiency.

**Brief Description of Drawings**

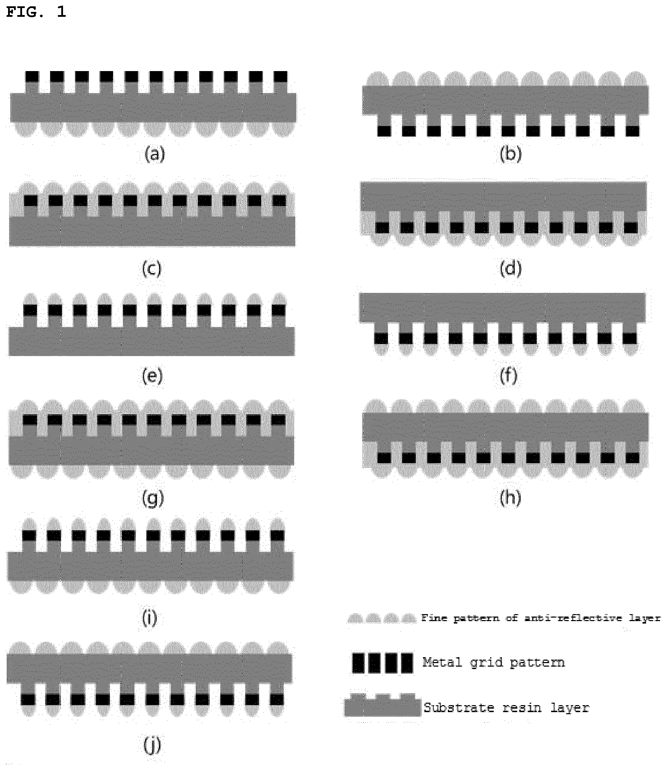

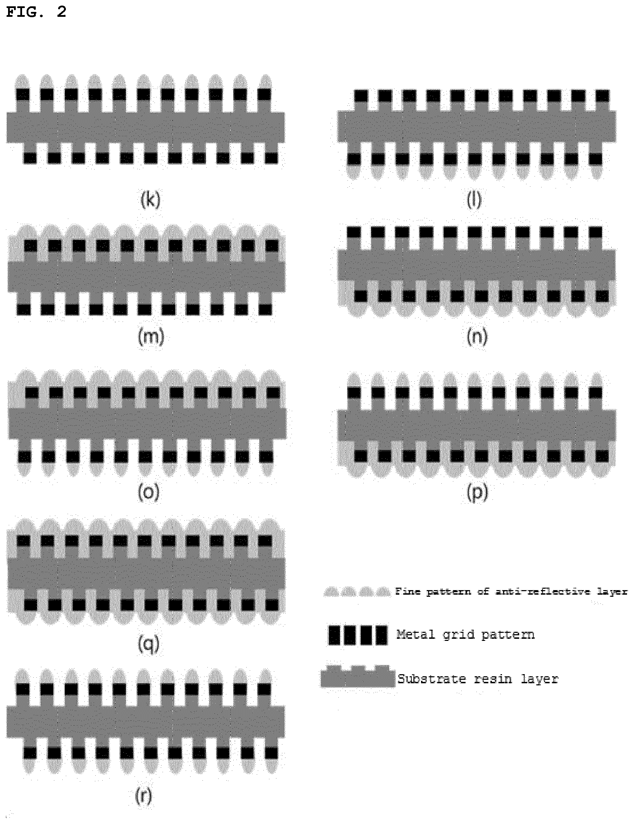

FIGS. 1 and 2 show various examples of the structure of a wire grid polarizing plate according to the present invention.

**Best Mode**

The present invention pertains to a wire grid polarizing plate, comprising a polarizing layer having an uneven pattern which is formed on at least one surface thereof and is configured such that a metal grid is formed on a plurality of grid-type protrusions, and an anti-reflective layer formed on at least one surface of the polarizing layer and configured such that a plurality of fine nano patterns is formed on the surface thereof, and to an optical component including the same. Here, the optical component according to the present invention may be exemplified by a liquid crystal display, but is not necessarily limited thereto.

More particularly, the wire grid polarizing plate of the present invention is a wire grid polarizing plate, comprising a polarizing layer including a substrate resin layer having an uneven pattern due to grid-type protrusions and a metal grid formed on the grid-type protrusions of the substrate resin layer; and an anti-reflective layer formed on at least one surface of the polarizing layer.

In the present invention, the substrate resin layer of the polarizing layer is preferably formed of at least one curable resin selected from the group consisting of an acrylic resin, a methacrylic resin, a polyvinyl-based resin, a polyester-based resin, a styrene-based resin, an alkyd-based resin, an amino-based resin, a polyurethane-based resin, and a silicone-based resin.

Specific examples of the curable resin may include homopolymers, copolymers or terpolymers of unsaturated polyester, methyl methacrylate, ethyl methacrylate, isobutyl methacrylate, n-butyl methacrylate, n-butylmethyl methacrylate, acrylic acid, methacrylic acid, hydroxyethyl methacrylate, hydroxylpropyl methacrylate, hydroxyethyl acrylate, acrylamide, methylol acrylamide, glycidyl methacrylate, ethyl acrylate, isobutyl acrylate, n-butyl acrylate, and 2-ethylhexyl acrylate.

In order to form the substrate resin layer, the polarizing layer of the present invention may further include a substrate film layer made of glass or any one transparent film selected from the group consisting of a triacetyl cellulose (TAC) film, a polymethyl methacrylate (PMMA) film, a polyethylene terephthalate film, a polycarbonate film, a polypropylene film, a polyethylene film, a polystyrene film, a polyepoxy film, a cyclic olefin polymer (COP) film, a cyclic olefin copolymer (COC) film, a copolymer film of a polycarbonate-based resin and a cyclic olefin polymer, and a copolymer film of a polycarbonate-based resin and a cyclic olefin copolymer.

The substrate film functions to support the substrate resin layer and the metal grid, and may have a thickness ranging from 5 μm to 250 μm so as to realize desired mechanical strength and flexibility, and preferably 38 μm to 125 μm.

Typically, as the line width and height of the metal grid increases, polarization efficiency may be improved, but P-polarized light transmittance may decrease. In consideration thereof, in the present invention, the metal grid has a height of 1 to 1000 nm and a line width of 1 to 140 nm. Also, taking into consideration polarization properties, preferably, the height of the grid is 10 to 500 nm and the line width is 5 to 100 nm, and more preferably, the height is 40 to 250 nm and the line width is 10 to 50 nm.

Also, the metal grid may have a pitch, defined as a distance from the point where any grid line starts to the point where the adjacent grid line starts, ranging from 50 to 200 nm. As the pitch increases, polarization properties are not exhibited, and as the pitch decreases, high P-polarized light transmittance may be maintained and polarization efficiency may be enhanced. Taking into account the limitations of manufacturing techniques, the pitch preferably falls in the range of 50 to 200 nm, and more preferably 80 to 150 nm.

In the present invention, the metal grid may be formed of any one metal or conductor selected from the group consisting of aluminum, copper, chromium, platinum, gold, silver, nickel and alloys thereof. Aluminum and an alloy thereof are preferably used considering reflectance and economic benefits. The stacking of metal grid conductive line on the curable resin may be performed through sputtering, vacuum thermal evaporation, or dry etching for forming a metal grid conductive line layer through simultaneous etching of a polymer and a metal, and the present invention is not limited thereto.

Here, the metal grid may have a linear grid shape, such as a prism shape or a lenticular shape, and the cross-section thereof may have a semicircular shape, an oval shape, a polygonal shape, a rounded polygonal shape, a "⌐" shape, an arc shape, a boomerang shape, or a dome shape, but this is not limiting, and various shapes may be represented. In the present invention, the metal grid may be formed on one or both sides of the substrate resin layer. When metal grids are formed on both sides of the substrate resin layer, the uneven pattern due to metal grids may be formed symmetrically on both sides, or may be formed asymmetrically. The metal grid formation surface may be determined depending on the direction in which the metal grid is formed, and in some cases, an isotropic substrate film may be optionally used.

Meanwhile, as known based on a variety of recent studies, when a fine uneven structure having a pitch equal to or less than a visible light wavelength (about 380 to 780 nm) is formed on the surface of an optical device, such as a display, a light-emitting diode, a solar cell, etc., anti-reflectivity and a lotus effect may be exhibited, thus increasing the efficiency of the optical device. Such a fine uneven structure is called a moth-eye structure, and mitigates the change in refractive index between two media having different refractive indices. Specifically, when light passes through two different media, a reflection phenomenon occurs due to the difference in refractive index. If there are fine irregularities between the two media, the refractive indices of the two media are continuously increased, thus suppressing reflection.

The polarization properties of the wire grid polarizing plate according to the present invention may be improved based on the principle of the moth eye. Specifically, the wire grid polarizing plate of the present invention is configured such that the anti-reflective layer including a plurality of nano patterns having a pitch of 10 to 500 nm and an aspect ratio of 1.0 to 5.0 is formed on at least one surface thereof, whereby the reflection of light that is incident on the polarizing plate is reduced or the transmittance of light that is polarized and emitted is improved, thus increasing overall P-polarized light transmittance.

The structure of the wire grid polarizing plate according to the present invention, including the anti-reflective layer, will now be described in detail with reference to the drawings. Specifically, when a metal grid is formed on one surface of the substrate resin layer as shown in FIG. 1, the anti-reflective layer of the present invention may be formed on a side opposite the side on which the metal grid is formed, as in (a) and (b), may be formed on the same side, as in (c) to (f), or may be formed on both surfaces of the polarizing plate regardless of the direction of formation of the metal grid, as in (g) to (j). As shown in FIG. 2, even when metal grids are formed on both surfaces of the substrate resin layer, the anti-reflective layer may be formed on either or both surfaces thereof. The design of the anti-reflective layer may be determined based on whether the reflection of light that is incident on the polarizing plate is to be decreased or whether the transmittance of light that is polarized and emitted is to be increased. When only the fine pattern is formed on the uneven pattern, as in (e), (f), (i), (j), (k), (1), (o), (p) and (r) to thus minimize the interface between the uneven pattern and the anti-reflective layer, desired effects may be further increased.

Although not limited thereto, the anti-reflective layer of the present invention may be formed using a typical pattern transfer process such as imprinting. For example, the curable resin composition may be applied through a slot die, and may then be passed through a release mold so that the pattern of the mold is transferred, thereby forming the anti-reflective layer having a fine nano pattern. Here, the pattern may have a microlens shape in which figures such as a hemisphere, a cylinder, a tetrahedron, a square pyramid, etc. are repeatedly formed, or may be a linear grid shape such as a prism shape or a lenticular shape.

The nano pattern of the anti-reflective layer preferably has a pitch of 10 to 500 nm and an aspect ratio of 1.0 to 5.0. When the pattern has the above nano size, the anti-reflective layer exhibits a transmittance of 95% or more upon irradiation with light at 550 nm, and changes in refractive index are mitigated through such a fine uneven structure, whereby the reflectance of incident light may be decreased and the transmittance of polarized light may be improved.

During the pattern transfer of the anti-reflective layer, light is primarily radiated in an amount of 50 to 150 $mj/cm^2$ onto the curable resin composition immediately before pattern transfer, whereby pre-curing may be carried out. Also, the thickness of the anti-reflective layer may be controlled in the range of 10 to 500 $\mu$m by adjusting the line speed of the roll-to-roll system depending on the end use and the desired specification.

Also, since a release mold for pattern transfer should facilitate the release thereof after pattern transfer and the washing thereof so as to realize repeated use thereof in the roll-to-roll process, it may be coated with at least one releasing agent selected from the group consisting of silicone, fluorine and Teflon. Surface treatment of a mold using a releasing agent may include immersing a mold in a diluted releasing agent solution, applying a releasing agent or a diluted solution thereof on the surface of a mold having a fine uneven structure, etc. The immersion of a mold in a diluted releasing agent solution is preferable because the surface of the mold having a fine uneven structure may be uniformly treated with the releasing agent.

After the pattern transfer, light is radiated in an amount of 150 $mj/cm^2$ or more, and preferably 150 to 1,000 $mj/cm^2$, to thus cure the curable composition, whereby the anti-reflective layer is finally formed. Here, if the amount of light is less than 150 $mj/cm^2$, no curing may occur, and reliability may become problematic. On the other hand, if the amount of light exceeds 1,000 $mj/cm^2$, the resulting layer may become brittle due to over-curing, and thus handleability or reliability may become problematic. However, the amount of light is not necessarily limited thereto, and in the roll-to-roll system during curing, the amount of light and the extent of curing may be optimized considering the line speed.

In a preferred aspect of the present invention, the curable resin composition for forming the anti-reflective layer may include 100 parts by weight of urethane acrylate, having a weight average molecular weight of 100 to 30,000; and 75 to 250 parts by weight of a fluorine-containing siloxane-acrylate oligomer having a weight average molecular weight of 100 to 10,000 based on 100 parts by weight of the urethane acrylate. Each weight average molecular weight preferably has to fall in the above range in order to prevent the wire grid polarizing plate from being excessively brittle or flexible, and the weight average molecular weight may be a value measured through a process for measuring the molecular weight of a polymer, such as MALDS (Matrix-Assisted Laser Desorption Ionization Mass Spectrometer) or GPC (Gel Permeation Chromatography).

The urethane acrylate is the main ingredient that is used to ensure durability, reliability to curling or yellowing, flexibility, etc., and the urethane acrylate may be contained in an amount of 20 to 40 wt% based on the total weight of the resin composition so that the anti-reflective layer has a curl value of 0 mm to 2.0 mm at 23°C.

Also, the fluorine-containing siloxane-acrylate oligomer in the present invention has a molecular structure in which siloxane-acrylate is substituted with fluorine, as the main ingredient that participates in a curing reaction, and may thus play an important role in increasing releasability from a mold after a curing process. Here, if the amount of the fluorine-containing siloxane-acrylate oligomer is less than 75 parts by weight based on 100 parts by weight of the urethane acrylate, releasability and transfer capability may decrease, and thus pattern agglomeration may occur. On the other hand, even when the amount thereof is 250 parts by weight or less, releasability may be sufficiently ensured, and thus the amount thereof must not exceed 250 parts by weight in consideration of the price of fluorine.

A typical optical sheet having a pattern includes silicone acrylate having a weight average molecular weight of 900 to 1,500 in order to ensure releasability from a mold. Here, silicon acrylate enables the transfer of a macro-sized pattern but releasability becomes unsatisfactory in the case of a nano-sized pattern. Furthermore, a fluorine resin may be used to ensure releasability, but may be easily left behind in the mold and may contaminate the mold, making it difficult to assure repeated use of the mold. On the other hand, when an oligomer having a unique structure in which siloxane-acrylate is substituted with fluorine is contained as the main ingredient, both releasability and pattern repeatability may be ensured.

The curable resin composition for forming the anti-reflective layer of the present invention may further include, based on 100 parts by weight of the urethane acrylate, 60 to 125 parts by weight of a diluent and 10 to 25 parts by weight of a polymerization initiator. In the present invention, the diluent may be added to adjust the viscosity of a resin, and is preferably an acrylate-based monomer. Since both the diluent and the main ingredient contain an acrylate-based monomer, radical polymerization occurs while double bonds of a vinyl group are broken, and thus a curing reaction may be easily carried out.

Here, the amount of the diluent preferably has to fall in the above range in order to maintain the resin viscosity of 100 to 300 cps. If the viscosity of the curable resin composition is less than 100 cps, flowability of the composition is excessively high during the roll-to-roll imprinting process, thus causing variation in film thickness. On the other hand, if the viscosity thereof exceeds 300 cps, the composition may penetrate between the nano patterns, making it difficult to perform patterning, which is undesirable.

The polymerization initiator may be at least one selected from the group consisting of a phosphine oxide-based polymerization initiator, a propanone-based polymerization initiator, a ketone-based polymerization initiator and a formate-bated polymerization initiator, and in order to prevent coloring or mechanical strength from deteriorating while facilitating the polymerization reaction, the polymerization initiator is preferably added in an amount of 10 to 25 parts by weight based on 100 parts by weight of the urethane acrylate.

Also, the curable resin composition for forming the anti-reflective layer may further include at least one additive selected from the group consisting of a UV absorber, a UV stabilizer, a color stabilizer, a leveling agent, an antioxidant, a defoaming agent, and an antistatic agent.

Thereby, the wire grid polarizing film having improved transmittance according to the present invention may have P-polarized light transmittance of 50% to 99%, S-polarized light transmittance of less than 1%, and polarization efficiency of 95% to 100%. Thus, when it is applied to an optical component, such as a liquid crystal display, a display having superior luminance and CR may be provided.

**Mode for Invention**

A better understanding of the present invention will be given through the following examples, which are merely set forth to illustrate the present invention, but are not to be construed as limiting the scope thereof.

**Example 1**

One surface of a triacetyl cellulose (TAC) film having a thickness of 80 $\mu$m was coated with an acrylic photosensitive composition, and was then brought into close contact with a nickel electroform stamp having an average protrusion height of 100 nm, a width of 30 nm, and a pattern pitch of 100 nm, after which UV light (high-pressure mercury lamp, 20 W/cm$^2$) was radiated toward the substrate layer to thus cure the acrylic photosensitive resin, thereby manufacturing a substrate resin layer having grid-type protrusions. Thereafter, aluminum was partially deposited through sputtering on the resin layer having grid-type protrusions, thus forming a metal grid having an average height of 120 nm, a width of 50 nm, and a metal pitch of 100 nm.

Furthermore, the remaining surface of the triacetyl cellulose film was coated with a curable resin composition (viscosity of 150 cps) prepared by mixing 50 wt% of a fluorine-containing siloxane-acrylate oligomer having a weight average molecular weight of 5,500, 20 wt% of polyurethane acrylate having a weight average molecular weight of 1,800, 25 wt% of 1,6-hexanediol diacrylate serving as a diluent, and 5 wt% of 1-hydroxy-cyclohexylphenyl-ketone serving as a polymerization initiator, and was then fed into a release soft mold having a nano prism pattern having a pitch of 100 nm and an aspect ratio of 3.5 to thus transfer the pattern, followed by curing with UV light of 500 mj/cm$^2$, thereby forming an anti-reflective layer having a moth-eye structure, ultimately manufacturing a WGP.

**Example 2**

The WGP of Example 2 was manufactured in the same manner as in Example 1, with the exception that the anti-reflective layer was formed on the metal grid.

**Example 3**

The WGP of Example 3 was manufactured in the same manner as in Example 1, with the exception that the anti-reflective layer was formed not only on the surface of the substrate film opposite the surface having the metal grid, as in Example 1, but also on the surface having the metal grid as in Example 2, whereby the anti-reflective layer was formed on both surfaces of the resin layer.

**Comparative Example 1**

The WGP of Comparative Example 1 was manufactured in the same manner as in Example 1, with the exception that only the metal grid was formed, without forming the anti-reflective layer.

**Comparative Example 2**

In order to confirm a difference from a reflective polarizing film, a typical absorption-type polarizing film (made by LG Chemical) was prepared.

The properties of Examples 1 to 3 and Comparative Examples 1 and 2 were evaluated as follows. The results are shown in Table 1 below.

**Measurement**

The WGPs of Examples 1 to 3 and Comparative Examples 1 and 2 were measured for P-polarized light transmittance ($T_P$) and S-polarized light transmittance ($T_S$) using RETS-100 (made by OTSUKA ELECTRONICS), and polarization efficiency (PE) was calculated based on Equation 1 below using the measured values. The results are shown in Table 1 below.

$$Equation\ 1)$$

$$PE(\%) = \sqrt{\frac{Tp - Ts}{Tp + Ts}}\ X\ 100$$

Also, a lower polarizing film was removed from a 5-inch liquid crystal display panel, the wire grid polarizing plate (WGP) of each of Examples and Comparative Examples was attached thereto, and the luminance thereof was measured. In order to analyze the relative luminance of WGP, a commercially available PVA absorption polarizer (Comparative Example 2) was used as a control group, and the luminance was determined by measuring luminance of any five points thereof using BM-7A (made by TOPCON, Japan) and averaging the measured values.

[Table 1]

| | Anti-reflective layer (pitch = 100 nm, aspect ratio = 3.5) | Polarization properties | | | Luminance |
| --- | --- | --- | --- | --- | --- |
| | | P-polarized light transmittance (%) | S-polarized light transmittance (%) | Polarization efficiency (%) | |
| Example 1 | Formation on surface opposite metal grid layer | 86 | 0.005 | 99.9942 | 140 |
| Example 2 | Formation on metal grid layer | 84 | 0.005 | 99.9940 | 137 |
| Example 3 | Formation on both sides | 88 | 0.006 | 99.9943 | 143 |
| Comparative Example 1 | No anti-reflective layer | 82 | 0.005 | 99.9939 | 130 |
| Comparative Example 2 | No anti-reflective layer | 80 | 0.005 | 99.9925 | 100 |

As is apparent from the results of Table 1, the WGP having the anti-reflective layer exhibited drastically improved P-polarized light transmittance even without a decrease in polarization efficiency, ultimately increasing luminance.

**Claims**

1. A wire grid polarizing plate, comprising:

   a polarizing layer having an uneven pattern which is formed on at least one surface thereof and is configured such that a metal grid is formed on a plurality of grid-type protrusions; and
   an anti-reflective layer formed on at least one surface of the polarizing layer and configured such that a plurality of fine nano patterns is formed on a surface thereof.

2. The wire grid polarizing plate of claim 1, wherein the metal grid of the polarizing layer has a height of 1 to 1000 nm, a line width of 1 to 140 nm, and a pitch, defined as a distance from a point where any grid line starts to a point where an adjacent grid line starts, of 50 to 200 nm.

3. The wire grid polarizing plate of claim 1, wherein the nano patterns of the anti-reflective layer have a pitch of 10 to 500 nm and an aspect ratio of 1.0 to 5.0.

4. The wire grid polarizing plate of claim 1, wherein the anti-reflective layer is formed from a curable resin composition comprising 100 parts by weight of urethane acrylate, having a weight average molecular weight of 100 to 30,000; and 75 to 250 parts by weight of a fluorine-containing siloxane-acrylate oligomer having a weight average molecular weight of 100 to 10,000, based on 100 parts by weight of the urethane acrylate.

5. The wire grid polarizing plate of claim 4, wherein the curable resin composition further comprises, based on 100 parts by weight of the urethane acrylate, 60 to 125 parts by weight of a diluent and 10 to 25 parts by weight of a polymerization initiator.

6. The wire grid polarizing plate of claim 1, wherein the wire grid polarizing plate has a P-polarized light transmittance of 50% to 99%, an S-polarized light transmittance of less than 1%, and a polarization efficiency of 95% to 100%.

7. An optical component, comprising the wire grid polarizing plate of any one of claims 1 to 6.

8. The optical component of claim 7, wherein the optical component has a contrast ratio (CR) of 500 to 1,000,000.

FIG. 1

(a)

(b)

(c)

(d)

(e)

(f)

(g)

(h)

(i)

Fine pattern of anti-reflective layer

Metal grid pattern

Substrate resin layer

(j)

FIG. 2

(k)

(l)

(m)

(n)

(o)

(p)

(q)

(r)

Fine pattern of anti-reflective layer

Metal grid pattern

Substrate resin layer

# EP 3 399 356 A1

<table>
<tr><td colspan="2">INTERNATIONAL SEARCH REPORT</td><td>International application No.<br><br>**PCT/KR2016/008583**</td></tr>
</table>

**A. CLASSIFICATION OF SUBJECT MATTER**

*G02B 5/30(2006.01)i, C08L 75/14(2006.01)i, C08L 83/04(2006.01)i, G02F 1/1335(2006.01)i*

According to International Patent Classification (IPC) or to both national classification and IPC

**B. FIELDS SEARCHED**

Minimum documentation searched (classification system followed by classification symbols)
G02B 5/30; B29C 33/40; H01L 51/50; B29C 59/18; G02F 1/1335; C08L 75/14; C08L 83/04

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: wire grid polarizing plate, lattice, metal, fine nano pattern, anti-reflection layer

**C. DOCUMENTS CONSIDERED TO BE RELEVANT**

| Category* | Citation of document, with indication, where appropriate, of the relevant passages | Relevant to claim No. |
|---|---|---|
| Y | KR 10-2013-0000756 A (LG INNOTEK CO., LTD.) 03 January 2013<br>See claims 1, 6, 25, paragraphs [0039]-[0052] and figures 2(a)-2(b). | 1-8 |
| Y | KR 10-2015-0011708 A (SAMSUNG DISPLAY CO., LTD.) 02 February 2015<br>See claim 6, paragraphs [0042], [0053] and figure 2. | 1-8 |
| A | JP 2011-213052 A (OJI PAPER CO., LTD.) 27 October 2011<br>See claims 1-2, 6-7 and figures 1-2. | 1-8 |
| A | KR 10-2012-0040871 A (LG INNOTEK CO., LTD.) 30 April 2012<br>See claims 1-2, 5-6 and figure 2. | 1-8 |
| A | JP 2009-069729 A (SEIKO EPSON CORP.) 02 April 2009<br>See claim 1 and figures 1(a)-1(b). | 1-8 |

☐ Further documents are listed in the continuation of Box C.     ☒ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br><br>20 OCTOBER 2016 (20.10.2016) | Date of mailing of the international search report<br><br>**21 OCTOBER 2016 (21.10.2016)** |
|---|---|
| Name and mailing address of the ISA/KR<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br><br>Telephone No. |

Form PCT/ISA/210 (second sheet) (January 2015)

INTERNATIONAL SEARCH REPORT
Information on patent family members

International application No.

**PCT/KR2016/008583**

| Patent document cited in search report | Publication date | Patent family member | Publication date |
|---|---|---|---|
| KR 10-2013-0000756 A | 03/01/2013 | NONE | |
| KR 10-2015-0011708 A | 02/02/2015 | US 2015-0028296 A1 | 29/01/2015 |
| JP 2011-213052 A | 27/10/2011 | JP 5621298 B2 | 12/11/2014 |
| KR 10-2012-0040871 A | 30/04/2012 | NONE | |
| JP 2009-069729 A | 02/04/2009 | JP 5045327 B2 | 10/10/2012 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20100102358

- KR 101336097